# EUROPEAN PATENT SPECIFICATION

(11) **EP 1 734 272 B1**
(45) Date of publication and mention of the grant of the patent: **04.03.2015**
(21) Application number: 06113432.6
(22) Date of filing: 03.05.2006
(51) Int. Cl.: F16C 35/04

(54) **Bearing Housing**
Lagergehäuse
Logement de palier

(30) Priority: 17.06.2005 SE 5013917
(43) Date of publication of application: 20.12.2006
(73) Proprietor: Aktiebolaget SKF, 415 50 Gothenburg (SE)
(72) Inventor: ÖSTLING, HENRIK, SE-126 37, Hägersten (SE); OLSSON, HENRIK, Katrineholm, SE-641 45 (SE); KARLSSON, MIKAEL R, Katrineholm, SE-641 31 (SE)

(56) References cited:
- EP-A- 1 503 096
- WO-A-83/01586
- GB-A- 2 203 199
- JP-A- 7 293 236

## Description

The present invention refers to a bearing housing and more specifically to a flanged bearing housing, i.e. a bearing housing (made from grey cast iron) in the form of a substantially annular sleeve, having at one axial side a flange which could be three- or four-winged or even round, and which adjacent its outer edges or its wing corners is provided with through-holes for attachment bolts for fitting the flanged bearing housing to a wall or the like.

Such flanged bearing housings are intended for use with self-aligning ball bearings and spherical roller bearings on adapter sleeves. The permissible radial load is dependent on the bearing or on the housing strength.

When such flanged bearing housings are subjected to heavy and particularly jerk-like loads, there is a problem in that the flange material around the attachment bores opposed to the direction of load is subjected to reaction forces, one force component of which is acting in a direction projecting substantially ±45° from the center of the bearing housing. These directions coincide with the directions where the material thickness at these attachment bores are at a minimum, which means that a heavy and/or momentary load increase results in that the material outside the attachment bore may burst and the bearing housing can come loose from its attachment and thereby become damaged and thereby also risking to injure people and damage material in the vicinity.

This means that the areas around the attachment bores opposed to the direction of load in the flange of a flanged bearing housing are the weakest portions of a flanged bearing housing, and the carrying capacity of the housing is therefore limited by these weak portions.

WO 83/01586 discloses a flanged bearing box which comprises a housing of a short cylindrical shape for engaging and holding a bearing, a base formed with an opening for engaging the housing, or a groove and a clamping bolt hole, in such a manner that the housing is engaged with or placed into a bonded integrally with the opening or the groove as if on a pillow.

JP 07 293236 discloses a support flange for an exhaust device, with different-sized through-holes for attachment bolts, to allow for differential thermal expansion.

The purpose of the present invention is to provide a modified flanged bearing housing of this type, by which the housing is less vulnerable to the forces and reaction forces acting on the attachment bolts and on the material around the attachment bores, and this has been obtained in the manner defined in the accompanying claim 1.

Hereinafter the invention will be described more in detail with reference to embodiments shown in the accompanying drawings.
Fig. 1 shows a cross section of a flanged bearing housing mounted on a shaft journal.
Fig. 2 is a perspective view of a flanged bearing housing according to the invention having a triangular flange.
Fig. 3 is a perspective view of a flanged bearing housing according to the invention having a rectangular flange.
Fig. 4 is a planar view from the front of the flanged bearing housing according to Fig. 3.
Fig. 5 is a view of the flanged bearing housing in Fig. 4 as seen from above, and
Fig. 6 shows in perspective a modified embodiment of the flanged bearing housing according to the invention.

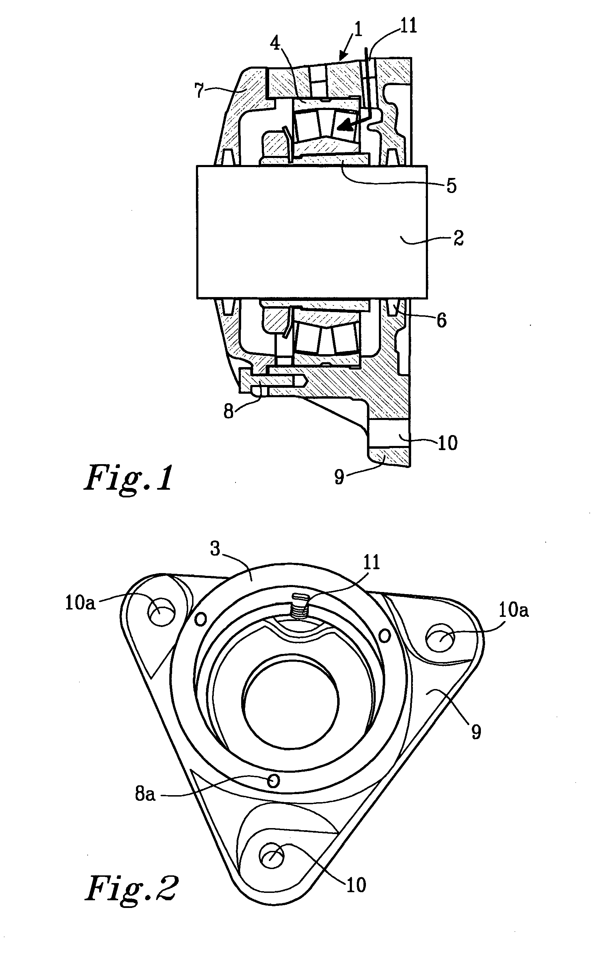

Fig. 1 shows in cross section a bearing housing 1 mounted on a shaft journal 2. The bearing housing is a flanged bearing housing having a substantially sleeve-formed main body 3 having an inner seat carrying a spherical roller bearing 4, which is mounted on an adapter sleeve 5 on the shaft journal 2, and the load acting on the bearing housing is substantially vertical.

The rear side of the main body 3 of the housing, that is the right hand side in Fig. 1, has an annular end wall projecting radially inwardly and ending with a groove 6, in which is inserted a sealing member (not shown in the drawing).

The front side (the left hand side in Fig. 1) is closed by an annular lid 7, which is attached to the main body by means of bolts 8, which are fitted into threaded bores 8a in the main body 3 (see Fig. 2). The inner edge of the lid 7 has a groove similar to that at the rear side, wherein is provided a not shown seal of appropriate type for sealing off against the shaft journal 2.

At the rear side, the main body 3 has a triangular flange 9 with a bore 10 for an attachment bolt (not shown) at every corner of the triangle. In a position above the bearing is provided a grease nipple 11 extending from above through the wall of the main body 3.

Fig. 2 shows the main body 3 of the bearing housing 1 according to Fig. 1 in a perspective view from the front side thereof. This bearing housing is mounted so that the side of the triangular flange 9 adjacent the grease nipple 11, is positioned substantially horizontally for ascertaining that the grease nipple will be situated at the upper part of the bearing housing. The bores for the attachment bolts at the corners of the flange 9 on both sides of the grease nipple 11 are identified by the reference numeral 10a for indicating that they differ from the bore 10 at the lower flange corner in the mounted position for the bearing housing. This difference is constituted therein that the upper bores 10a have a diameter corresponding to the maximum size limit for the bolts to be accommodated therein, whereas the lower bore 10 have a diameter corresponding to the minimum size limit for the bolts.

Thereby it is clear that the lower bolt in the bolt bore 10, will carry most of the load on the bearing accommodated in the housing, as this bolt will engage the wall of the bolt hole first, and increased load on the bearing will result in increased pressure between the lower bolt and the wall of its bore and the upper bolts will not take any radial load until the bolt bore 10 and/or the bolt therein has collapsed. It is easily understood that the load acting between the lower bolt and its bore 10 is directed upward, where the material between the bore 10 and the inner circumference of the main body 3 is much thicker than the material above the upper bores 10a and the upper border of the flange 9. Therefore the load carrying capacity of the bearing housing is increased substantially as the rather thick material between the lower bore 10 and the interior of the main body will take the load and relieve the weaker portions between the upper bores 10a and the upper side of the flange 9.

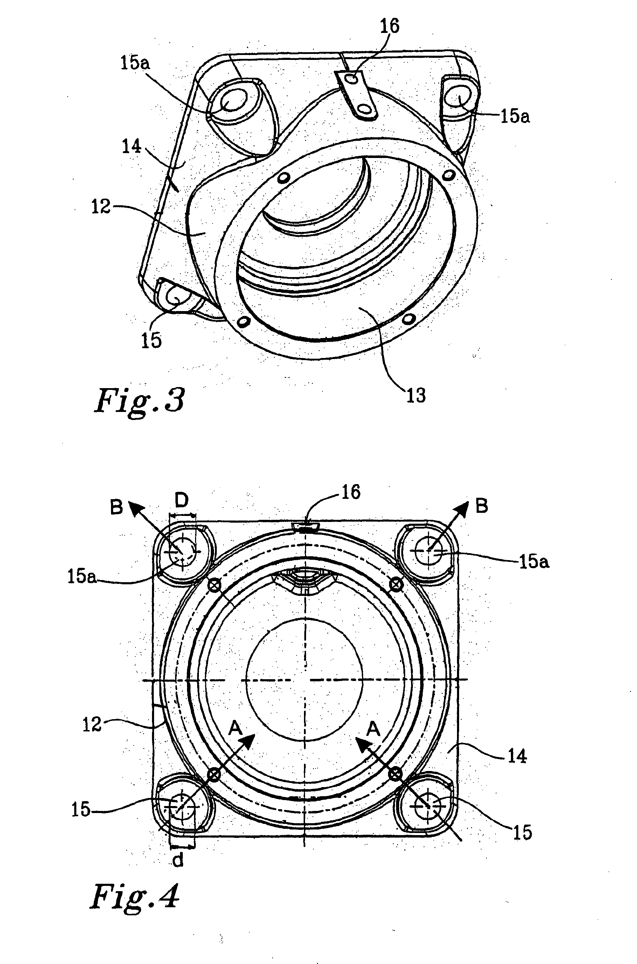

In Fig. 3 is shown in perspective a main body of another embodiment of a flanged bearing housing according to the present invention. Also in this embodiment the load is acting in a substantially vertical direction, and the main body 12 has an inner seat 13 for accommodating a (not shown) bearing, which shall support a not shown shaft journal. At one axial end of the substantially tubular main body 12, there is provided a radially extending flange 14, which differs from that according to the embodiment shown in Figs. 1 and 2 in that this flange 14 is not triangular, but has four corners, each one of which is provided with a bore 15, 15a for accommodating an attachment bolt (not shown). Between two of the flange corners the main body 13 is provided with a grease nipple 16 for supply of lubricant to the interior of the bearing housing.

In Fig. 4 this second embodiment of the main body 12 of the flanged bearing housing is shown in a planar view from its open end. The main body 12 of the bearing housing is mounted thus that two sides of the quadrangular flange are positioned substantially horizontal and the other two sides substantially vertical. The two bores 15 in the flange 14 adjacent the lower flange side, in mounted position for the bearing housing, have a diameter d, whereas the diameter of the bores 15a positioned adjacent the upper flange side have a bigger diameter D. In a bearing housing where the flange has a size of 210 x 210 mm, it is appropriate to use bolts of size M16 6 and where the smaller bores 15 could preferably have a diameter of 17,5 mm, whereas the larger bores have a diameter of 18,5 mm.

In the bores 15 and 15a is then used attachment bolts (not shown), of the same size, which can be accommodated in the differently sized bores 15, 15a in the flange 14. In this manner the forces acting on the bearing, and on the bearing housing attachments will primarily act in the directions shown by the arrows A, and not in the directions shown with arrows B, which should have been the result if the bores 15a for the upper attachment bolts had the same or smaller diameters than the lower bores 15. It is easy to understand that the bearing housing more easily could take up the forces acting in the direction of the arrows A as the forces in this situation act towards much more mass of the bearing housing main body 12 and the flange 14 than if the main direction of the forces were along the directions shown with the arrows B, where the comparatively thin material portions bordering the attachment bores 15a, could be thorn up at large loads acting upon the bearing in the bearing housing.

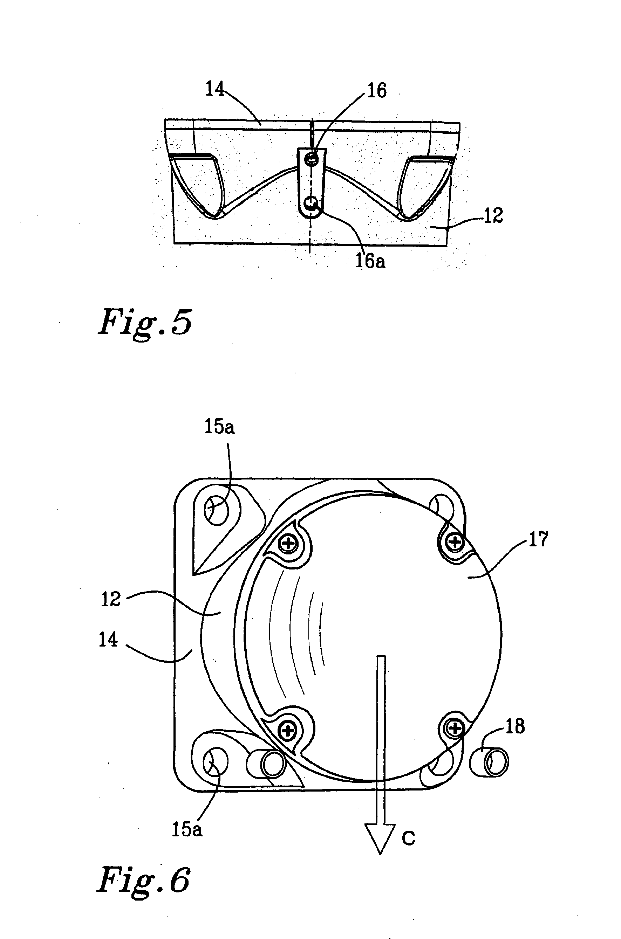

Fig. 5 shows the flanged bearing housing according to Fig. 4 in a view from above, and as can be seen, the housing has two grease nipples 1 6, 1 6a, intended for alternatively supplying lubricant to a bearing having a central lubricant opening in the outer bearing ring or to one side of the bearing, such as illustrated in Fig. 1.

Fig. 6 shows in perspective an alternative embodiment of a flanged bearing housing according to the invention, where the main body 12 with its flange 14 is shown with a lid 17 attached with bolts to the main body. The difference as compared to the embodiment according to Fig. 3 is that the flange 14 at all four corners have bores 15a of the same size, the two bores at the lower side of the bearing housing in mounted position being provided with bushings 18, having a smaller cross-sectional inner size than the through-holes 15a, thereby allowing the upper bores 15a to be relieved from load acting downwards until the load has become so large that the lower bolts or their bores 15 have become deformed.

In this view is also illustrated the direction of the load C acting on the bearing and therefore on the housing.

The invention is not limited to the embodiments shown in Figs. 1 and 2, in Figs. 3 to 5 and in Fig. 6, but modifications and variants are possible within the scope of the appended claims.

It shall be observed that although the illustrations all show the bearing housings subjected to loads acting in substantially vertical direction, - which is the most stressing case, due to the fact that the weight of the bearing housing is added to the load - it is also possible to use the bearing housings for loads acting in other directions, i.e. horizontally or even acting upwards, whereby the smaller bolt holes are positioned thus that they are situated at the side of the flange opposed to the direction of the load.

## Claims

1. A bearing housing of the type incorporating a substantially sleeve-formed main body (3; 12), with an internal bearing seat (13) for accommodating a bearing (4), and having at one axial side a radial flange (9; 14) projecting outside the outer wall surface of the main body, and having adjacent its outer edge a number of through-holes (10, 10a; 15, 15a) for attachment bolts for fitting the bearing housing to a substantially planar, vertical surface,
characterized therein,
that the through-holes (10a, 15a) situated at the side of the flange (9; 14), opposite the side towards which a load (C) acts on the bearing housing, have a bigger cross-section than the through-holes (10, 15) arranged at the flange side towards which the load (C) acts, in order to initially direct reaction forces (A) acting on the flange of the bearing housing following the load (C) on the bearing housing to the smaller bore/bores only.

2. A bearing housing as claimed in claim 1,
characterized therein,
that the flange (9) is a triangular flange, positioned with one of the three flange corners on a line extending in the direction of the load and substantially perpendicularly to the line interconnecting the bigger through-holes.

3. A bearing housing as claimed in claim 2,
characterized therein,
that the bigger through-holes (10a) of the flange (9) have the same cross-section, which is bigger than the through-hole (10) at the opposed flange side.

4. A bearing housing as claimed in claim 1,
characterized therein,
that the flange (14) is a quadrangular flange positioned with two of its corners along a first imagined line and with the other two corners positioned along a second imagined line parallel with the first imagined line.

5. A bearing housing as claimed in claim 4,
characterized therein,
that the corners on the first line are situated substantially behind the corresponding flange corners on the second line as seen in the direction of the expected load.

6. A bearing housing as claimed in claim 5,
characterized therein,
that the through-holes (15a) on the first line situated at the side towards which the expected load acts have a cross-sectional size (D) being bigger than the cross-sectional size (d) of the through-holes (15) on the second line.

7. A bearing housing of the type incorporating a substantially sleeve-formed main body (12), with an internal bearing seat (13) for accommodating a bearing (4), and having at one axial side a radial flange (14) projecting outside the outer wall surface of the main body, and having adjacent its outer edge a number of through-holes (15a) for attachment bolts for fitting the bearing housing to a substantially planar, vertical surface,
characterized therein,
that the through-holes (15a) at every corner of the flange (14) have the same size, and that a bushing (18) have a smaller cross-sectional inner size than the through-holes (15a) is inserted in each one of the at least one through-holes at the side of the bearing housing towards which the load (C) acts, thereby reducing the diametrical size of the bore which accommodates the attachment bolt.

## Patentansprüche

1. Lagergehäuse der Art, die einen im Wesentlichen hülsenförmigen Hauptkörper (3; 12) eingliedert, mit einem inneren Lagersitz (13) zum Unterbringen eines Lagers (4), und das an einer axialen Seite einen radialen Flansch (9; 14) aufweist, der außerhalb der Außenwandfläche des Hauptkörpers vorsteht, und seiner Außenkante benachbart eine Anzahl Durchgangslöcher (10, 10a; 15, 15a) zur Anbringung von Schrauben zum Montieren des Lagergehäuses an einer im Wesentlichen planen, vertikalen Oberfläche aufweist,
**dadurch gekennzeichnet,**
**dass** die Durchgangslöcher (10a, 15a), die sich an der Seite des Flanschs (9; 14) gegenüber der Seite befinden, zu der hin eine Last (C) auf das Lagergehäuse einwirkt, einen größeren Querschnitt als die Durchgangslöcher (10, 15) aufweisen, welche an der Flanschseite angeordnet sind, zu der hin die Last (C) einwirkt, um anfangs Reaktionskräfte (A), die der Last (C) auf das Lagergehäuse folgend auf den Flansch des Lagergehäuses einwirken, nur zur/zu den kleineren Bohrung/en zu leiten.

2. Lagergehäuse nach Anspruch 1, **dadurch gekennzeichnet, dass** der Flansch (9) ein dreieckiger Flansch ist, der mit einer der drei Flanschecken auf einer Linie angeordnet ist, die in der Richtung der Last und im Wesentlichen senkrecht zu der Linie verläuft, die die größeren Durchgangslöcher miteinander verbindet.

3. Lagergehäuse nach Anspruch 2, **dadurch gekennzeichnet, dass** die größeren Durchgangslöcher (10a) des Flanschs (9) denselben Querschnitt aufweisen, der größer als das Durchgangsloch (10) auf der gegenüberliegenden Flanschseite ist.

4. Lagergehäuse nach Anspruch 1, **dadurch gekennzeichnet, dass** der Flansch (14) ein viereckiger Flansch ist, der mit zwei seiner Ecken entlang einer ersten gedachten Linie angeordnet ist und mit den anderen zwei Ecken entlang einer zweiten gedachten Linie angeordnet ist, die parallel zur ersten gedachten Linie verläuft.

5. Lagergehäuse nach Anspruch 4, **dadurch gekennzeichnet, dass** sich bei Betrachtung in der Richtung der erwarteten Last die Ecken auf der ersten Linie im Wesentlichen hinter den entsprechenden Flanschecken auf der zweiten Linie befinden.

6. Lagergehäuse nach Anspruch 5, **dadurch gekennzeichnet, dass** die Durchgangslöcher (15a) auf der ersten Linie, die sich auf der Seite befinden, zu der hin die erwartete Last einwirkt, eine Querschnittsgröße (D) aufweisen, die größer als die Querschnittsgröße (d) der Durchgangslöcher (15) auf der zweiten Linie ist.

7. Lagergehäuse der Art, die einen im Wesentlichen hülsenförmigen Hauptkörper (12) eingliedert, mit einem inneren Lagersitz (13) zum Unterbringen eines Lagers (4), und das an einer axialen Seite einen radialen Flansch (14) aufweist, der außerhalb der Außenwandfläche des Hauptkörpers vorsteht, und seiner Außenkante benachbart eine Anzahl Durchgangslöcher (15a) zur Anbringung von Schrauben zum Montieren des Lagergehäuses an einer im Wesentlichen planen, vertikalen Oberfläche aufweist,
**dadurch gekennzeichnet,**
**dass** die Durchgangslöcher (15a) an jeder Ecke des Flanschs (14) dieselbe Größe aufweisen, und dass eine Buchse (18) mit einer kleineren Innenquerschnittsgröße als die Durchgangslöcher (15a) in jedes der zumindest einen Durchgangslöcher auf der Seite des Lagergehäuses, zu dem hin die Last (C) einwirkt, eingefügt ist, wodurch die Durchmessergröße der Bohrung verringert ist, welche die Anbringungsschraube aufnimmt.

## Revendications

1. Logement de palier du type comprenant un corps principal (3 ; 12) présentant essentiellement la forme d'un manchon, comportant un siège de palier intérieur (13) destiné à recevoir un palier (4), et comportant, au niveau d'un côté axial, une bride radiale (9 ; 14) qui fait saillie à l'extérieur de la surface de paroi extérieure du corps principal, et comportant, en position adjacente à son bord extérieur, un certain nombre de trous traversants (10, 10a ; 15, 15a) destinés à des boulons de fixation permettant d'installer le logement de palier sur une surface verticale essentiellement plane,
**caractérisé en ce que**
les trous traversants (10a, 15a) situés sur le côté de la bride (9 ; 14) opposé au côté vers lequel une charge (C) agit sur le logement de palier, présentent une section transversale plus grande que celle des trous traversants (10, 15) se trouvant sur le côté de la bride vers lequel agit la charge (C), de façon à diriger initialement les forces de réaction (A), agissant sur la bride du logement de palier par suite de la charge (C) sur le logement de palier, uniquement vers le ou les plus petit (s) trou (s) .

2. Logement de palier selon la revendication 1, **caractérisé en ce que**
la bride (9) est une bride triangulaire, positionnée de sorte que l'un des trois angles de la bride se trouve sur une ligne s'étendant dans la direction de la charge et essentiellement perpendiculairement à la ligne reliant les plus grands trous traversants.

3. Logement de palier selon la revendication 2, **caractérisé en ce que**
les plus grands trous traversants (10a) de la bride (9) présentent la même section transversale, qui est plus grande que celle du trou traversant (10) situé sur le côté opposé de la bride.

4. Logement de palier selon la revendication 1, **caractérisé en ce que**
la bride (14) est une bride quadrangulaire positionnée de sorte que deux de ses angles se trouvent le long d'une première ligne imaginaire et que les deux autres angles se trouvent le long d'une seconde ligne imaginaire parallèle à la première ligne imaginaire.

5. Logement de palier selon la revendication 4, **caractérisé en ce que**
les angles se trouvant sur la première ligne sont situés essentiellement derrière les angles de la bride correspondants sur la seconde ligne, en les observant dans la direction de la charge prévue.

6. Logement de palier selon la revendication 5, **caractérisé en ce que**
les trous traversants (15a) se trouvant sur la première ligne située sur le côté vers lequel agit la charge prévue présentent une taille en section transversale (D) supérieure à la taille en section transversale (d) des trous traversants (15) se trouvant sur la seconde ligne.

7. Logement de palier du type comprenant un corps principal (12) présentant essentiellement la forme d'un manchon, comportant un siège de palier intérieur (13) destiné à recevoir un palier (4), et comportant, au niveau d'un côté axial, une bride radiale (14) qui fait saillie à l'extérieur de la surface de paroi extérieure du corps principal, et comportant, en position adjacente à son bord extérieur, un certain nombre de trous traversants (15a) destinés à des boulons de fixation permettant d'installer le logement de palier sur une surface verticale essentiellement plane,
**caractérisé en ce que**
les trous traversants (15a) se trouvant à chaque angle de la bride (14) présentent la même taille, et **en ce qu'**une bague (18) présentant une taille intérieure en section transversale inférieure à celle des trous traversants (15a) est insérée dans le ou chacun des trous traversants sur le côté du logement de palier vers lequel agit la charge (C), ceci ayant pour effet de réduire la taille diamétrale de l'orifice qui reçoit le boulon de fixation.
